# EUROPEAN PATENT APPLICATION

(11) **EP 4 693 263 A1**
(43) Date of publication of application: **11.02.2026**
(21) Application number: 24918906.9
(22) Date of filing: 09.04.2024
(51) Int. Cl.: G09F 9/30, G09F 21/04, F16H 1/16, F16H 25/20, F16H 19/04, B60K 35/00

(54) **DISPLAY DEVICE FOR VEHICLE**

(30) Priority: 19.01.2024 KR 20240008724
(71) Applicant: LG ELECTRONICS, INC., Seoul 07336 (KR)
(72) Inventor: CHOI, Biseok, Seoul 06772 (KR); TAK, Wooseong, Seoul 06772 (KR); PARK, Chanhoon, Seoul 06772 (KR)
(74) Representative: Vossius & Partner Patentanwälte Rechtsanwälte mbB
(86) International application number: PCT/KR2024/004774
(87) International publication number: WO 2025/154872

(57) **Abstract**

A latch mechanism for a vehicle may comprise a fixed frame; a swivel frame disposed on a display module and having a driven rack formed on the swivel frame; a drive pinion engaged with the driven rack; and a drive source for rotating the drive pinion. A guide path may be formed in one of the fixed frame and the swivel frame. A guide pin guided along the guide path is disposed in the other of the fixed frame and the swivel frame. The swivel frame rotates around a virtual axis.

## Description

### [Technical Field]

The present disclosure relates to a display device for a vehicle.

### [Background Art]

The vehicle may be equipped with a display device.

An example of a display device for a vehicle installed in a vehicle may be mounted on a rotating display holder disclosed in Korean Patent Publication No. 10-2023-0147861 A (published on October 24, 2023), and the rotating display holder includes a mounting bracket that is installed on an instrument panel of a vehicle to mount a display device, and when an air bag installed inside the instrument panel is deployed, the rear part thereof is hit by the deployed air bag and rotates forward toward a vehicle interior seat, and prevents the display device from being released from the mounting state thereof; and a rotating support part that is connected to the mounting bracket to rotatably support the mounting bracket with respect to the instrument panel.

### [Disclosure]

### [Technical Problem]

The present embodiment provides a display device for a vehicle capable of reliably swinging a display module with a simple structure.

The present embodiment provides a display device for a vehicle capable of minimizing distortion of the position or angle of a swivel frame disposed on a display module.

The present embodiment provides a display device for a vehicle capable of more stably swinging a display module by rotating a swivel frame around a fixed virtual axis.

### [Technical Solution]

A display device for a vehicle according to the present embodiment may comprise a fixed frame; a swivel frame disposed on a display module and having a driven rack formed on the swivel frame; a drive pinion engaged with the driven rack; and a drive source for rotating the drive pinion.

A guide path may be formed in one of the fixed frame and the swivel frame.

A guide pin guided along the guide path may be disposed in the other of the fixed frame and the swivel frame.

The swivel frame may rotate around a virtual axis. The virtual axis may be position in the display module.

The display device a vehicle may further comprise an auxiliary guide path formed in one of the fixed frame and the swivel frame; and an auxiliary guide pin disposed in the other of the fixed frame and the swivel frame and guided along the auxiliary guide path.

A size of the auxiliary guide path may be smaller than a size of the guide path.

The number of auxiliary guide path may be less than the number of guide path.

One example of the swivel frame may comprise a rear body disposed in front of the display module; and an outer body protruding forward from the rear body, spaced apart from the rack, and having the guide pin disposed on the outer body.

The other example of the swivel frame may comprise a rear body disposed in front of the display module; an inner body protruding forward from the rear body and having the rack formed on the inner body; and an outer body protruding forward from the rear body, spaced apart from the inner body, and having the guide pin disposed on the outer body.

The display device a vehicle may further comprise a roller rotatably disposed on the guide pin.

The display device a vehicle may further comprise a display frame having a through hole formed in the display frame through which the swivel frame passes and an open back surface.

The guide pin may include a left guide pin and a right guide pin spaced apart from each other in the left-right direction.

The guide path may include a left guide path through which the left guide pin is guided; and a right guide path spaced apart from the left guide path in the left-right direction and through which the right guide pin is guided.

Each of the left guide path and the right guide path may include an inner guide path; and an outer guide path connected to the inner guide path.

The inner guide path may be convex in a direction opposite to the outer guide path.

The outer guide path may be convex in a direction opposite to the inner guide path.

A length of the outer guide path is longer than a length of the inner guide path.

The drive pinion may include a left drive pinion and a right drive pinion spaced apart in the left-right direction.

The rack may include a left rack that is engaged with or separated from the left drive pinion, and a right rack that is engaged with or separated from the right drive pinion.

A distance between the rear ends of the right and left racks may be longer than a distance between the front ends of the right and left racks.

The left and right racks may be formed in a round shape.

The virtual axis may include a left virtual axis closer to a left end of the display module of the left and right ends of the display module; and a right virtual axis closer to a right end of the display module of the left and right ends of the display module.

The left rack may be spaced apart from the left pinion when the display module rotates around the left virtual axis.

The right rack may be spaced apart from the right pinion when the display module rotates around the right virtual axis.

The drive source may include a left drive source that rotates the left drive pinion; and a right drive source that rotates the right drive pinion.

The left drive source may include a left motor; and a left motor gear installed on a rotational shaft of the left motor and engaged with the left drive pinion.

The right drive source may include a right motor; and a right motor gear installed on a rotational shaft of the right motor and engaged with a right drive pinion.

### [Advantageous Effect]

According to the present embodiment, when the drive pinion drives the driven rack, the guide path guides the guide pin, thereby minimizing any misalignment of the swivel frame position or the swivel frame angle.

Furthermore, the swivel frame can be stably rotated around the virtual axis, minimizing malfunctions of the swivel frame.

Furthermore, a drive link, nut, lead screw, etc. for the swivel frame swing is not required, and the simple structure of the drive pinion, driven rack, guide path, and guide pin enables the swivel frame to swing reliably around the virtual axis.

### [Description of Drawings]

FIG. 1 is a view illustrating an example of a display device for a vehicle according to the present embodiment;
FIG. 2 is a perspective view illustrating the swivel frame illustrated in FIG. 1;
FIG. 3 is a perspective view illustrating the fixed frame illustrated in FIG. 1;
FIG. 4 is a view illustrating the display module illustrated in FIG. 1 when swiveled;
FIG. 5 is a view illustrating another example of a display device for a vehicle according to the present embodiment;
FIG. 6 is a perspective view illustrating the swivel frame illustrated in FIG. 5;
FIG. 7 is a perspective view illustrating the fixed frame illustrated in FIG. 5.

### [Best Mode]

Hereinafter, specific embodiments of the present disclosure will be described in detail with reference to the drawings.

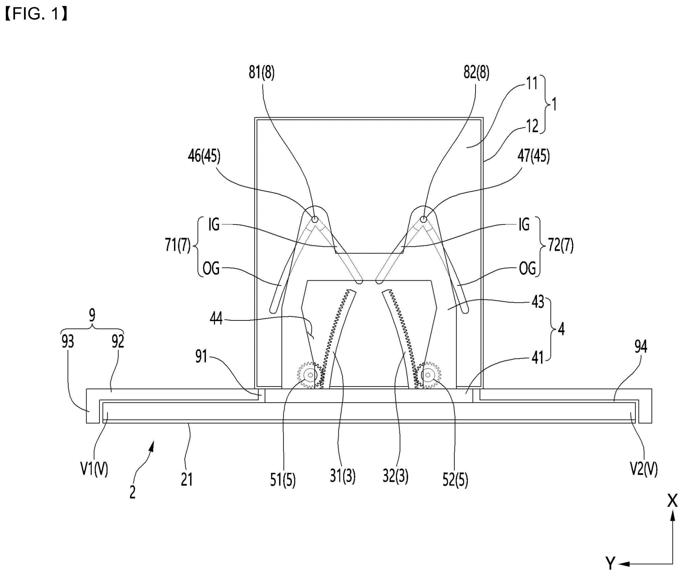

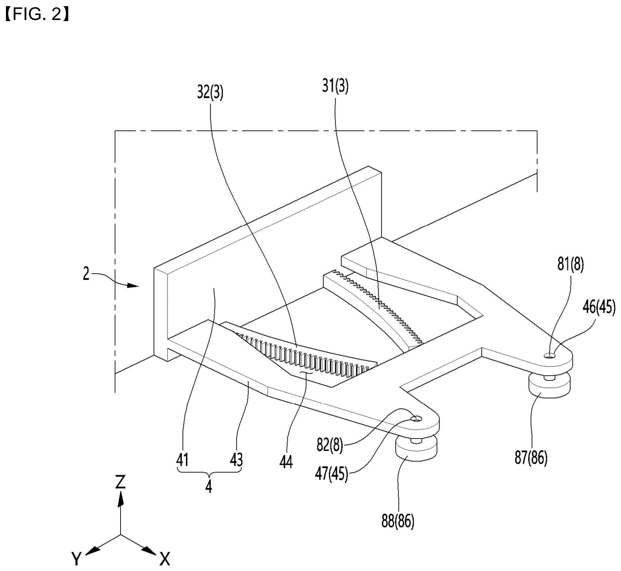

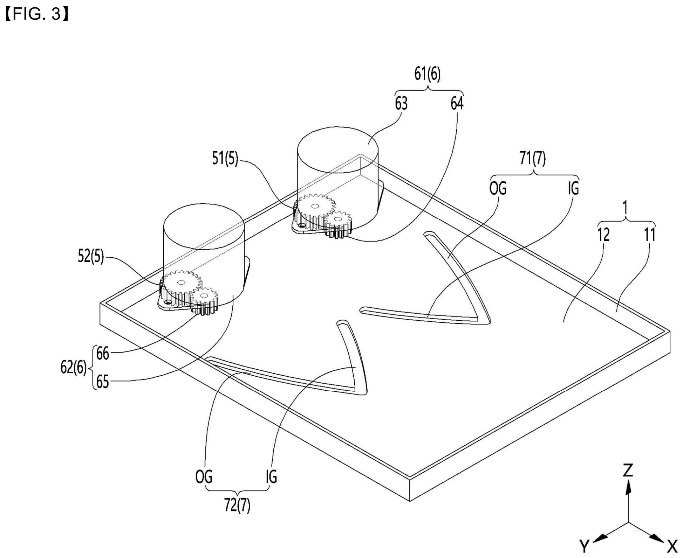

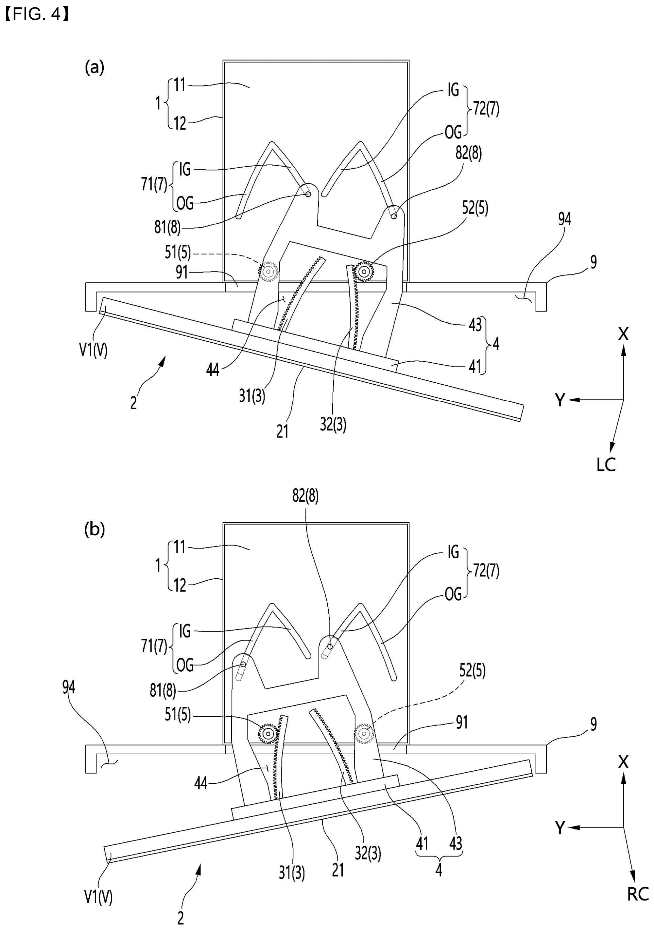

FIG. 1 is a view illustrating an example of a display device for a vehicle according to the present embodiment; FIG. 2 is a perspective view illustrating the swivel frame illustrated in FIG. 1; FIG. 3 is a perspective view illustrating the fixed frame illustrated in FIG. 1; and FIG. 4 is a view illustrating the display module illustrated in FIG. 1 when swiveled;
FIG. 4 (a) illustrates a display module illustrated in FIG. 1 when swiveled in one direction around a left virtual axis, and FIG. 4 (b) illustrates a display module illustrated in FIG. 1 when swiveled in another direction around a right virtual axis.

An example of a display device for a vehicle may comprise a fixed frame 1; a swivel frame 4 positioned on a display module 2 and having a driven rack 3 formed thereon; a drive pinion 5 engaged with the driven rack 3; and a drive source 6 that rotates the drive pinion 5.

A guide path 7 may be formed on one of the fixed frame 1 and the swivel frame 4, and a guide pin 8 guided by the guide path 7 may be disposed on the other of the fixed frame 1 and the swivel frame 4.

The display device for a vehicle can be installed in the cockpit or instrument panel of the vehicle and may visually provide various information to passengers.

The display device for a vehicle can be a center display located in the center of the cockpit or instrument panel, or a Center Information Display (CID) that provides information to passengers in the driver's or passenger's seat.

The display device for a vehicle can be a Driver Display located in front of the driver's seat.

The display device for a vehicle can be a Passenger Display located in front of the passenger's seat, or a Passenger Information Display (PIP) or Co-Driver Display (CDD).

The display device for a vehicle can also be installed on the hood or backrest of the vehicle, and the installation location of the display device for a vehicle is not limited.

Hereinafter, the display device for vehicle is described as display installed in the cockpit or instrument panel the vehicle. Forward is defined as the forward direction of the vehicle, and backward is defined as the reverse direction.

The fixed frame 1 can be placed in the cockpit or instrument panel of a vehicle. The fixed frame 1 may be placed inside the cockpit or instrument panel of the vehicle.

The fixed frame 1 may be mounted in the cockpit or instrument panel of the vehicle and may be fixed in position.

The fixed frame 1 can include a lower plate 11 and a frame 12 erected on the lower plate 11. The upper surface of the fixed frame 1 may be open.

The display module 2 may be swiveled relative to the fixed frame 1.

The display module 2 may be swiveled to the left about a virtual axis V, as shown in FIG. 4 (a), or to the right about a virtual axis V, as shown in FIG. 4 (b).

The virtual axis V may be the rotational center axis of the display module 2, and an example of the display device for a vehicle may be swiveled in a plurality of different directions around the plurality of virtual axes V. The virtual axes V may be located on the display module 2.

The plurality of virtual axes V may include a left virtual axis V1 closer to the left end of the display module 2 than the right end of the display module 2, and a right virtual axis V2 closer to the right end of the display module 2 than the left end of the display module 2

The left virtual axis V1 may be located on the left side of the display module 2, and the right virtual axis V2 may be located on the right side of the display module 2.

The left virtual axis V1 and the right virtual axis V2 may be spaced apart from each other in the left-right direction of the display module 2

The display module 2 may be swiveled around a left virtual axis V1 and may be swiveled to the right around a right virtual axis V2.

The left virtual axis V1 may be the rotational center axis of the display module 2 and the swivel frame 4.

The display module 2 and the swivel frame 4 may be rotated at an inclined angle around the left virtual side V1.

The right virtual axis V2 may be the rotational center axis of the display module 2 and the swivel frame 4.

The display module 2 and the swivel frame 4 may be rotated at an inclined angle around the right virtual side V2.

The display module 2 may be a rear-view display module with a screen 21 provided on the rear side of the display module 2. As illustrated in a of FIG. 4, the display module 2 may be swivelable at a predetermined angle so that the screen 21 faces the leftward tilt direction LC, or as illustrated in b of FIG. 4, the display module 2 may be swivelable at a predetermined angle so that the screen 21 faces the rightward tilt direction RC.

The display module 2 may be operated in a left swing mode, as illustrated in FIG. 4 (a), in which it swings to be tilt to the left, and in a right swing mode, as illustrated in FIG. 4 (b), in which it swings to be tilt to the right .

The display module 2 may be selectively swung in either the left swing mode or the right swing mode.

A user input unit, such as a button or voice recognition module, that can input the mode of the display module 2, may be provided in the vehicle or the display device for a vehicle. A passenger may input the left swing mode or the right swing mode through the user input unit.

A processor disposed in a vehicle or display device for a vehicle may control a drive source 7 based on user input.

The driven rack 3 may cause the swivel frame 4 to rotate around a virtual axis V when the drive source 6 is driven.

The driven rack 3 may be formed integrally with the swivel frame 4 or manufactured separately from the swivel frame 4 and then fastened to the swivel frame 4.

The driven rack 3 may protrude forward from the swivel frame 4 and extend in a straight or curved shape.

A plurality of driven racks 3 may be formed. A pair of driven racks 3 may include a left rack 31 and a right rack 32.

The left rack 31 and the right rack 32 may be spaced apart from each other in the left-right direction Y.

The distance between the rear ends of the left rack 31 and the right rack 32 may be longer than the distance between the front ends of the left rack 31 and the right rack 32.

The left rack 31 and the right rack 32 may be formed to gradually approach each other as they move forward.

Each of the left rack 31 and the right rack 32 may be formed to have a rounded shape.

The left rack 31 may be engaged with the left drive pinion 51, as shown in FIG. 1 and FIG. 4 (b), or may be separated from the left drive pinion 51, as shown in FIG. 4 (a).

When the left rack 31 engaged with the left drive pinion 51, the left rack 31 may be moved by the left drive pinion 51.

The left rack 31 may be separated from the left drive pinion 51 when the display module 2 rotates around the left virtual axis V1. The left rack 31 may be separated from the left drive pinion 51 while the display module 2 rotates around the left virtual axis V1.

The right rack 32 may be engaged with the right drive pinion 52, as shown in of FIG. 1 and FIG. 4 (a), or may be separated from the right drive pinion 52, as shown in FIG. 4 (b).

The right rack 32 may be separated from the right drive pinion 52 when the display module 2 rotates around the right virtual axis V2. The right rack 32 may be separated from the right drive pinion 52 while the display module 2 rotates around the right virtual axis V2.

The swivel frame 4 may be disposed on the display module 2 and, as illustrated in FIG. 4, may be swivelable together with the display module 2.

The swivel frame 4 may be a moving frame that moves along an arc-shaped trajectory around a virtual axis V.

The swivel frame 4 may rotate around the virtual axis V.

The swivel frame 4 may include a rear body 41 and an outer body 43.

The rear body 41 may be disposed in front of the display module 2. When viewed from the vehicle interior, the rear body 41 may be concealed by the display module 2.

The outer body 43 may protrude forward from the rear body 41. The outer body 43 may protrude forward from the front of the rear body 41.

The outer body 43 may surround the left rack 31 and the right rack 32. The outer body 43 may protect the left rack 31 and the right rack 32.

A receiving hole 44 for receiving the left rack 31 and the right rack 32 may be formed in the outer body 43.

A guide pin 8 may be disposed in the outer body 43. A pin through hole 45 through which the guide pin 8 passes may be formed in the outer body 43.

A pair of guide pins 8 may be disposed in the outer body 43, and the pin through hole 45 can include a left through hole 46 through which the left guide pin 81 of the pair of guide pins 8 passes, and a right through hole 47 through which the right guide pin 82 of the pair of guide pins 8 passes.

A drive pinion 5 may be engaged with a driven rack 3. The drive pinion 5 may be rotatably disposed on the fixed frame 1. The drive pinion 5 may be rotatably disposed on a lower plate 11. The drive pinion 5 may rotate around a vertical axis on the lower plate 11.

A plurality of drive pinions 5 may be provided. The drive pinions 5 may correspond 1:1 with the driven rack 3. A pair of drive pinions 5 may be provided. The pair of drive pinions 5 may include a left drive pinion 51 and a right drive pinion 52 spaced apart in the left-right direction Y.

The left drive pinion 51 may be fixed to the fixed frame 1, and the left rack 31 may be rotated around the right virtual axis V2, as shown in FIG. 4 (b).

The left drive pinion 51 may be engaged with the left rack 31, as shown in FIG. 4 (b), or separated from the left rack 31 and spaced apart from the left rack 31, as shown in FIG. 4 (a).

The right drive pinion 52 may be fixed to the fixed frame 1, and the right rack 32 may be rotated around the left virtual axis V1, as shown in FIG. 4 (a).

The right drive pinion 52 may be engaged with the right rack 32, as shown in FIG. 4 (a), or separated from the right rack 32 and spaced apart from the right rack 32, as shown in FIG. 4 (b).

The drive source 6 may rotate the drive pinion 5.

The drive source 6 may rotate the drive pinion 5 above the fixed frame 1.

An example of the drive source 6 may comprise a motor and a motor gear that is rotated by the motor and engaged with the drive pinion 5.

The other example of the drive source 6 may comprise a cylinder and at least one power transmission member between the cylinder and the drive pinion 5 that transmits the driving force of the cylinder to the drive pinion 5.

The drive source 6 may be any configuration capable of rotating the drive pinion 5. While the following description will focus on examples that comprise a motor and a motor gear, it should be understood that the drive source 6 is not limited to a motor and a motor gear.

The motor may be mounted on the fixed frame 1 or the display frame 9 described below, and may be spaced apart from the lower plate 11.

The motor gear may be rotatably disposed between the motor and the lower plate 11.

The drive source 6 may correspond 1:1 to the drive pinion 5. A plurality of drive sources 6 may be provided. A pair of drive sources 6 may be provided.

The pair of drive sources 6 illustrated in FIG. 3 may include a left drive source 61 that rotates the left drive pinion 51; and a right drive source 62 that rotates the right drive pinion 52.

The left drive source 61 and the right drive source 62 may be spaced apart in the left-right direction Y.

The left drive source 61 may include a left motor 63; and a left motor gear 64 installed on the rotational shaft of the left motor 63 and engaged with the left drive pinion 51.

The right drive source 62 may include a right motor 65; and a right motor gear 66 installed on the rotation shaft of the right motor 65 and engaged with the right drive pinion 52.

The left motor 63 and the right motor 65 may have different driving times when the display module 2 swings.

The left motor 63 and the right motor 65 may be started to drive together, and the driving time of one may be longer than the driving time of the other.

As illustrated in a of FIG. 4, when the display module 2 swings to the left, the left motor 63 and the right motor 65 may be started to drive together, and the left motor 63 may be stopped after being driven for a first time (e.g., 3 seconds), and the right motor 65 may be stopped after being driven for a second time (e.g., 10 seconds), and the second time may be longer than the first time.

When the display module 2 swings to the left, the left motor 63 may be stopped before the right motor 65, and the right motor 65 may be stopped after a set time has elapsed after the left motor 63 has stopped. The driving time of the left motor 63 may be shorter than the driving time of the right motor 65.

Conversely, as illustrated in b of FIG. 4, when the display module 2 swings to the right, the left motor 63 and the right motor 65 may be started to drive together, and the right motor 63 may be stopped after being driven for a first period of time (e.g., 10 seconds), and the right motor 65 may be stopped after being driven for a second period of time (e.g., 3 seconds), and the second period of time may be shorter than the first period of time.

When the display module 2 swings to the right, the right motor 65 may be stopped before the left motor 63, and the left motor 63 may be stopped after a set time has elapsed after the right motor 65 has stopped. The operating time of the right motor 65 may be shorter than that of the left motor 63.

The guide path 7 may be formed on the fixed frame 1. The guide path 7 may be formed in the lower plate 11.

The guide path 7 may correspond 1:1 with the guide pin 8. A plurality of guide paths 7 may be formed.

The swivel frame 4may be restrained the position of the swivel frame 4 and angle of the swivel frame 4 by the plurality of guide paths 7 of the fixed frame 1 and may rotate around a virtual axis V.

A pair of guide paths 7 may be formed.

The guide path 7 may guide the swivel frame 4 to rotate around the left virtual axis V1 when the display module 1 rotates around the left virtual axis V1, while the right drive pinion 52 engages with the right rack 32.

The guide path 7 may guide the swivel frame 4 to rotate around the right virtual axis V2 when the display module 1 rotates around the right virtual axis V2, while the left drive pinion 51 engages with the left rack 31.

The pair of guide paths 7 may include a left guide path 71 guiding the left guide pin 81 and a right guide path 72 guiding the right guide pin 82.

The left guide path 71 and the right guide path 72 may be spaced apart from each other in the left-right direction Y in the fixed body 1 and may not meet.

Each of the left guide path 71 and the right guide path 72 may include an inner guide path IG and an outer guide path OG connected to the inner guide path IG.

The front end of the inner guide path IG and the front end of the outer guide path OG may meet.

The distance between the inner guide path IG and the outer guide path OG may become shorter as they move forward.

The inner guide path IG may be convex in the direction opposite of the outer guide path OG.

The outer guide path OG may be convex in the direction opposite of the inner guide path IG.

The inner guide path IG may have an acute angle with the outer guide path OG.

The length of the outer guide path OG may be longer than that of the inner guide path IG.

The left guide path 71 and the right guide path 72 may be symmetrical with respect to a center line that crosses the center of the fixed frame 1 in the front-rear direction.

The left guide path 71 may be formed to the left of the center line of the fixed frame 1, and the right guide path 72 may be formed to the right of the center line of the fixed frame 1.

The inner guide path IG of the left guide path 71 and the inner guide path IG of the right guide path 72 may be spaced apart from each other in the left-right direction Y.

The outer guide path OG of the left guide path 71, the inner guide path IG of the left guide path 71, the inner guide path IG of the right guide path 72, and the outer guide path OG of the right guide path 72 are sequentially disposed in the left-right direction Y of the fixed frame 1

The guide pin 8 may be formed integrally with the swivel frame 4 or manufactured separately from the swivel frame 4 and then placed on the swivel frame 4.

The guide pin 8 may extend downward from the swivel frame 4 and penetrate the guide path 7 in the vertical direction Z.

The shape of the guide pin 8 may be a circular rod shape or a roller shape to minimize friction.

The guide pin 8 may correspond 1:1 with the guide path 7. The plurality of guide pins 8 are provided. A pair of guide pins 8 may be provided.

The pair of guide pins 8 may include a left guide pin 81 and a right guide pin 82 spaced apart from the left guide p1n 81 in the left-right direction Y.

The display device for a vehicle may further comprise a roller 86 rotatably disposed on the guide pin 8. A roller 86 may be mounted on a portion of the guide pin 8 extending downwardly from the fixed frame 1 through the guide path 7.

The roller 86 may be located on the lower side of the lower plate 11.

A plurality of rollers 86 may be provided. A pair of rollers 86 may be provided. The pair of rollers 86 may include a left roller 87 rotatably disposed on the left guide pin 81 and a right roller 88 rotatably disposed on the side guide pin 82.

The display device for a vehicle may further comprise a display frame 9.

The display frame 9 may form the rear exterior of the vehicle display device.

A portion of the display frame 9 may be exposed to the vehicle interior.

The display frame 9 may have a through hole 91 formed through which the swivel frame 4 passes.

The display frame 9 may have an open rear surface.

The display frame 9 may comprise a front body 92 and a frame 93 protruding rearward from the front body 92. The display frame 9 may be fixed to the cockpit or instrument panel of vehicle. The display frame 9 may be formed integrally with the fixed frame 1 or may be fastened to a fixed frame 1 manufactured separately from the fixed frame 1.

A space 94 may be formed within the display frame 9, and the display module 2 may be inserted into the space 94 and accommodated therein. When the display module 2 is swiveled, a portion of the display module 2 may be pulled out of the space S and the remaining portion of the display module 2 may be accommodated in the space S.

The left virtual axis V1 and the right virtual axis V2 may be disposed within the space S when the display module 2 is not swiveled.

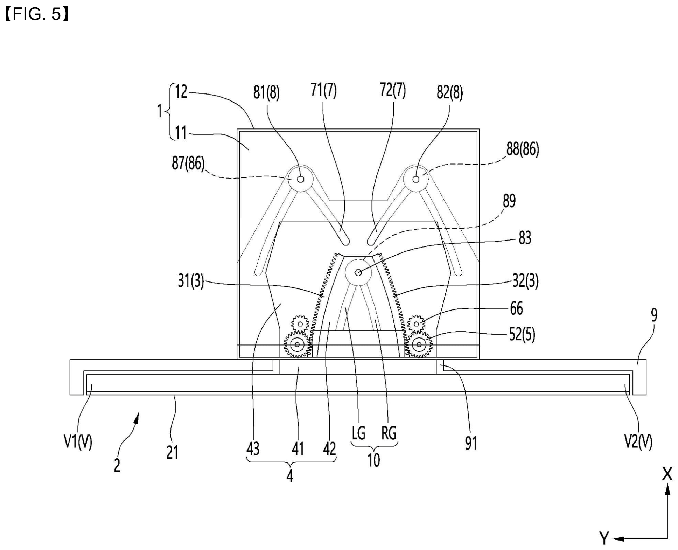

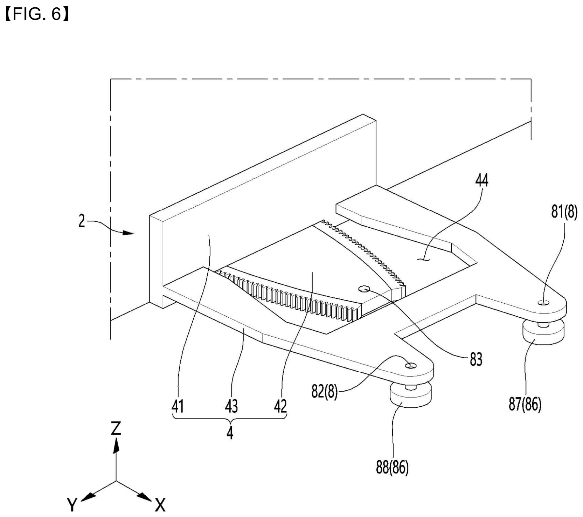

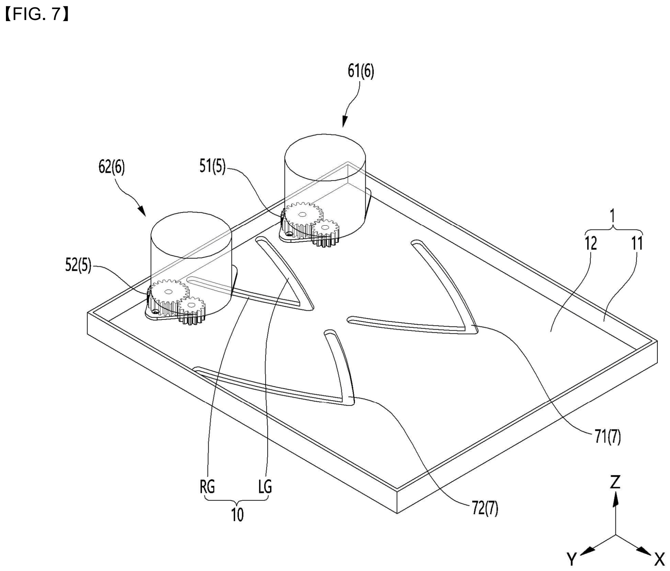

FIG. 4 is a view illustrating the display module illustrated in FIG. 1 when swiveled; FIG. 5 is a view illustrating another example of a display device for a vehicle according to the present embodiment; FIG. 6 is a perspective view illustrating the swivel frame illustrated in FIG. 5; and FIG. 7 is a perspective view illustrating the fixed frame illustrated in FIG. 5.

Another example of the display device for a vehicle may further comprise an auxiliary guide path 10 formed on one of the fixed frame 1 and the swivel frame 4; and an auxiliary guide pin 83 disposed on the other of the fixed frame 1 and the swivel frame 4 and guided by the auxiliary guide path 10.

The swivel frame 4 may comprise a rear body 41, an inner body 42, and an outer body 43.

The rear body 41 may be disposed in front of the display module 2. When viewed from the vehicle interior, the rear body 41 may be concealed by the display module 2.

The inner body 42 may protrude forward from the rear body 41. The inner body 42 may protrude forward from the front surface of the rear body 41.

The width of the inner body 42 in the left-right direction Y may become shorter as it moves forward.

A rack 3 may be formed on the inner body 42. The rack 3 may be formed at a side end of the inner body 42. The left rack 31 may be formed at the left end of the inner body 42, and the right rack 32 may be formed at the right end of the inner body 42.

The outer body 43 may protrude forward from the rear body 41. The outer body 43 may protrude forward from the front of the rear body 41.

The outer body 43 may be spaced apart from the inner body 42. The outer body 43 may surround the inner body 42. The outer body 42 may surround the left rack 31, the right rack 32, and the front end of the inner body 42.

Another example of the display device for a vehicle may have other components and functions identical or similar to those of the vehicle display device, except for the auxiliary guide path 10, inner body 42, and auxiliary guide pin 83. Hereinafter, the same reference numerals will be used, and a detailed description thereof will be omitted.

The auxiliary guide path 10 may be formed on the fixed frame 1. The auxiliary guide path 10 may be formed in the lower plate 11.

The auxiliary guide path 10 may be spaced apart from the guide path 8 and may not be connected to the guide path 8.

The size of the auxiliary guide path 10 may be smaller than the size of the guide path 8.

The number of auxiliary guide paths 10 may be fewer than the number of guide paths 8.

A single auxiliary guide path 10 may be formed.

The auxiliary guide path 10 may include a left auxiliary guide path LG and a right auxiliary guide path RG connected to the left guide path LG.

The front end of the left auxiliary guide path LG and the front end of the right auxiliary guide path RG may meet.

The distance between the left auxiliary guide path LG and the right auxiliary guide path RG may become shorter as they move forward.

The left auxiliary guide path LG may be convex in the direction opposite of the right auxiliary guide path RG.

The right auxiliary guide path RG may be convex in the direction opposite of the left auxiliary guide path LG.

The left auxiliary guide path LG and the right auxiliary guide path RG may form an acute angle.

The length of the left auxiliary guide path LG may be equal to the length of the right auxiliary guide path RG.

The left auxiliary guide path LG and the right auxiliary guide path RG may be symmetrical with respect to a center line that crosses the center of the fixed frame 1 in the front-rear direction.

The left auxiliary guide path LG may be formed on the left side of the center line of the fixed frame 1, and the right auxiliary guide path RG may be formed on the right side of the center line of the fixed frame 1.

The auxiliary guide pin 83 may be disposed perpendicular to the inner body 42. A portion of the auxiliary guide pin 83 may extend downward from the inner body 42, and the auxiliary guide pin 83 may penetrate the auxiliary guide path 10.

The auxiliary guide pin 83 may be spaced apart from the guide pin 8.

When the display module 2 rotates around the left virtual axis V1, the auxiliary guide pin 83 may be guided along the right auxiliary guide path LG.

When the display module 2 rotates around the right virtual axis V2, the auxiliary guide pin 83 may be guided along the left auxiliary guide path LG.

The display device for a vehicle may further comprise an auxiliary roller 89 rotatably disposed on the auxiliary guide pin 83.

The auxiliary roller 89 may be mounted on a portion of the auxiliary guide pin 83 that extends downward from the fixed frame 1 through the auxiliary guide path 10.

The auxiliary roller 89 may be disposed on the lower side of the lower plate **11.**

This embodiment is not limited to the above embodiments, and it is also possible to replace the driven rack 3 and the drive pinion 5 with an arc-shaped cylinder that moves the roller 86 along an arc-shaped trajectory around the virtual axis V. The arc-shaped cylinder may include a cylinder and an advancing/retreating member that engages with the roller 86 and is advanced/retreating along an arc-shaped path by the cylinder.

The above description is merely an example of the technical idea of the present disclosure, and those skilled in the art will appreciate that various modifications and variations may be made without departing from the essential characteristics of the present disclosure.

Accordingly, the embodiments disclosed in the present disclosure are not intended to limit the technical idea of the present disclosure but to explain it, and the scope of the technical idea of the present disclosure is not limited by these embodiments.

The scope of protection of the present disclosure should be interpreted by the claims below, and all technical ideas within a scope equivalent thereto should be interpreted as being included in the scope of the rights of the present disclosure.

## Claims

1. A display device a vehicle comprising:
a fixed frame;
a swivel frame disposed on a display module and having a driven rack formed on the swivel frame;
a drive pinion engaged with the driven rack; and
a drive source for rotating the drive pinion,
wherein a guide path is formed in one of the fixed frame and the swivel frame,
and a guide pin guided along the guide path is disposed in the other of the fixed frame and the swivel frame,
wherein the swivel frame rotates around a virtual axis.

2. The display device a vehicle of claim 1, further comprising:
an auxiliary guide path formed in one of the fixed frame and the swivel frame; and
an auxiliary guide pin disposed in the other of the fixed frame and the swivel frame and guided along the auxiliary guide path.

3. The display device a vehicle of claim 2,
wherein a size of the auxiliary guide path is smaller than a size of the guide path, and the number of auxiliary guide path is less than the number of guide path.

4. The display device a vehicle of claim 1,
wherein the swivel frame comprises:
a rear body disposed in front of the display module;
an outer body protruding forward from the rear body, spaced apart from the rack, and having the guide pin disposed on the outer body.

5. The display device a vehicle of claim 1, wherein the swivel frame comprises:
a rear body disposed in front of the display module;
an inner body protruding forward from the rear body and having the rack formed on the inner body; and
an outer body protruding forward from the rear body, spaced apart from the inner body, and having the guide pin disposed on the outer body.

6. The display device a vehicle of claim 1, further comprising:
a roller rotatably disposed on the guide pin.

7. The display device a vehicle of claim 1, further comprising
a display frame having a through hole formed in the display frame through which the swivel frame passes and an open back surface.

8. The display device a vehicle of claim 1,
wherein the guide pin includes a left guide pin and a right guide pin spaced apart from each other in the left-right direction,
wherein the guide path includes a left guide path through which the left guide pin is guided; and a right guide path spaced apart from the left guide path in the left-right direction and through which the right guide pin is guided.

9. The display device a vehicle of claim 8,
wherein each of the left guide path and the right guide path includes
an inner guide path; and
an outer guide path connected to the inner guide path,
wherein the inner guide path is convex in a direction opposite to the outer guide path,
and the outer guide path is convex in a direction opposite to the inner guide path.

10. The display device a vehicle of claim 9,
wherein a length of the outer guide path is longer than a length of the inner guide path.

11. The display device a vehicle of claim 1,
wherein the drive pinion includes a left drive pinion and a right drive pinion spaced apart in the left-right direction,
wherein the rack includes a left rack that is engaged with or separated from the left drive pinion, and a right rack that is engaged with or separated from the right drive pinion.

12. The display device a vehicle of claim 11,
wherein a distance between the rear ends of the right and left racks is longer than a distance between the front ends of the right and left racks.

13. The display device a vehicle of claim 11,
wherein the left and right racks are formed in a round shape.

14. The display device a vehicle of claim 11,
wherein the virtual axis includes
a left virtual axis closer to a left end of the display module of the left and right ends of the display module; and
a right virtual axis closer to a right end of the display module of the left and right ends of the display module.

15. The display device a vehicle of claim 11,
wherein the left rack is spaced apart from the left pinion when the display module rotates around the left virtual axis, and the right rack is spaced apart from the right pinion when the display module rotates around the right virtual axis.

16. The display device a vehicle of claim 11,
wherein the drive source includes:
a left drive source that rotates the left drive pinion; and
a right drive source that rotates the right drive pinion.
